# EUROPÄISCHE PATENTSCHRIFT

(11) **EP 4 339 467 B1**
(45) Veröffentlichungstag und Bekanntmachung des Hinweises auf die Patenterteilung: **25.06.2025**
(21) Anmeldenummer: 22196041.2
(22) Anmeldetag: 16.09.2022
(51) Int. Cl.: F16B 19/10

(54) **BLINDNIET, SOWIE SYSTEM UND VERFAHREN ZUM HERSTELLEN VON ABGEDICHTETEN BLINDNIETVERBINDUNGEN**
BLIND RIVET, AND SYSTEM AND METHOD FOR PRODUCING SEALED BLIND RIVET CONNECTIONS
RIVET AVEUGLE, AINSI QUE SYSTÈME ET PROCÉDÉ DE FABRICATION DE CONNEXIONS DE RIVET AVEUGLE ÉTANCHES

(43) Veröffentlichungstag der Anmeldung: 20.03.2024
(73) Patentinhaber: Airbus Operations GmbH, 21129 Hamburg (DE)
(72) Erfinder: Skirke, Jörn, 21129 Hamburg (DE)

(56) Entgegenhaltungen:
- US-A1- 2014 044 498

## Beschreibung

### Technisches Gebiet

Die vorliegende Beschreibung betrifft einen Blindniet sowie ein System und ein Verfahren zum Herstellen von abgedichteten Blindnietverbindungen.

### Technischer Hintergrund

Im Flugzeugbau werden zum Zusammensetzen einzelner Flugzeugbauteile üblicherweise zahlreiche Nietverbindungen eingesetzt. Herkömmliche Nietverbindungen sind hierbei zweiteilig ausgeführt und umfassen einen Niet und eine Nietmutter. Zur Herstellung der Nietverbindungen sind eine Nietbohrung und ein beidseitiger Zugang zu der Nietbohrung erforderlich, um von einer Seite den Niet in die Nietbohrung zu stecken und auf der anderen Seite die Nietmutter auf den Niet aufzufädeln. Dies ist zeitaufwändig, je nach Ausführung der Werkstücke schwierig oder umständlich. Bei größeren Werkstücken, die nicht nur randseitig miteinander vernietet werden sind zudem zwei Personen erforderlich, die den Niet und die Nietmutter anbringen.

Eine vereinfachte Variante zum Herstellen von Nietverbindungen verwendet Blindniete, die lediglich einen einseitigen Zugang zu einer Nietbohrung erfordern und zudem durch entsprechende Werkzeuge automatisierbar sind (vgl. US 2014/0044498 A1). Neben einer signifikanten Reduktion der Installationszeit, der Kosten und der Geräuschentwicklung werden aufgrund der reduzierten Zugänglichkeitsanforderungen neue, andersartige Gestaltungen möglich. Die Ergonomie wird erhöht und für die Herstellung einer Nietverbindung wird lediglich eine einzelne Person erfordert.

Insbesondere bei der Verbindung von Flugzeugkomponenten, welche in direkten Kontakt mit der Umgebung treten, können bei Blindnietverbindungen jedoch abzudichtende Zwischenräume, Vertiefungen oder Spalte auftreten, um eine darauf aufgebrachte Lackschicht lückenlos und glatt aufbringen zu können. Eine geeignete Nachbehandlung umfasst üblicherweise das Aufbringen eines Dichtmaterials auf die Nietverbindungen, das Verspachteln und das anschließende Entfernen überschüssigen Dichtmaterials. Dies kann jedoch unter Umständen aufwändig sein und zumindest teilweise den Zeitgewinn und die Kostenreduktion bei der Blindnietmontage wieder ausgleichen.

### Beschreibung

Es ist folglich eine Aufgabe der Erfindung, einen Blindniet, ein Verbindungssystem und/oder ein Verfahren zum Herstellen einer Blindnietverbindung vorzuschlagen, bei dem der manuelle Aufwand bei der Nachbehandlung reduzierbar ist.

Diese Aufgabe wird gelöst durch einen Blindniet mit den Merkmalen des unabhängigen Anspruchs 1. Vorteilhafte Ausführungsformen und Weiterbildungen der Erfindung sind den Unteransprüchen und der nachfolgenden Beschreibung zu entnehmen.

Es wird ein Blindniet zum Verbinden von Werkstücken vorgeschlagen, aufweisend einen hohlen, verformbaren Nietkörper mit einem Auflagekragen und einer sich hieran anschließenden Hülse, einen in der Hülse angeordneten und sich durch den Auflagekragen erstreckenden Nietdorn mit einem Werkzeugaufnahmekopf, und mindestens einen Dichtring, wobei der mindestens eine Dichtring zwischen dem Auflagekragen und dem Werkzeugaufnahmekopf angeordnet ist, wobei der mindestens eine Dichtring aus einem aushärtbaren und nicht vollständig ausgehärteten Dichtmaterial besteht, wobei der mindestens eine Dichtring so angeordnet ist, dass er bei einer Kontraktion des Blindniets von einem mit dem Werkzeugaufnahmekopf verbindbaren Werkzeug oder von einem Abschnitt des Nietdorns axial zu dem Auflagekragen gepresst wird, und wobei der mindestens eine Dichtring dazu ausgebildet ist, beim Pressen des Dichtrings radial und axial in Spalte und Zwischenräume auf dem Auflagekragen und zwischen dem Auflagekragen und den Werkstücken zu fließen und dort anzuhaften.

Es wird erfindungsgemäß ein alternativer Blindniet vorgeschlagen, der bei einer werkzeuggeführten Kontraktion automatisch zur vollständigen Abdichtung der Blindnietverbindung an den Werkstücken führt. Es können herkömmliche Werkzeuge zum Befestigen des Blindniets eingesetzt werden, die auch bei üblichen Nietprozessen Verwendung finden. Die vorangehend erläuterten Vorteile der Blindnietverbindung gegenüber einer herkömmlichen Nietverbindung können aufrechterhalten werden, gleichzeitig wird jedoch der Aufwand für Nacharbeiten, insbesondere von Schleifarbeiten, deutlich reduziert, indem ein automatisches Füllen von Spalten und Zwischenräumen erfolgt. Die hierfür notwendigen, wesentlichen Komponenten des Blindniets werden weiter nachfolgend beschrieben.

Der Nietkörper besteht im Wesentlichen aus der Hülse, die in eine Nietbohrung der zu verbindenden Werkstücke gesteckt wird. Die Einstecktiefe wird durch den Auflagekragen begrenzt, der sich auf eine die Nietbohrung umgebende Randfläche legt. Die Hülse ist derart konzipiert, dass sie durch eine Zugkraft, welche ein von der Nietbohrung abgewandtes Ende der Hülse in Richtung der Nietbohrung zieht, verformt. Hierbei wird die Hülse in axialer Richtung verkürzt und weitet sich in radialer Richtung auf, sodass sie an einer von dem Auflagekragen abgewandten Seite an die Werkstücke gequetscht wird. Diese werden dann zwischen dem Auflagekragen und dem verformten Teil der Hülse eingeklemmt.

Der Nietdorn ist dafür vorgesehen, den Nietkörper wie beschrieben zu der Nietbohrung zu ziehen. Dies kann auf unterschiedliche Weise geschehen. In einer ersten Variante könnte der Nietdorn lediglich eine zugfeste Verbindung mit dem von dem Auflagekragen abgewandten Ende des Nietkörpers aufweisen und durch das an den Nietdorn gesetzte Werkzeug gezogen werden. In einer zweiten Variante könnten die Hülse ein Innengewinde und der Nietdorn ein komplementäres Außengewinde aufweisen. Durch das Werkzeug angetrieben kann der Nietdorn rotiert werden, sodass durch die ineinandergreifenden Gewinde eine Zugkraft auf das betreffende Ende des Nietkörpers ausgeführt wird, welches zur gewünschten Verformung der Hülse führt.

Der Werkzeugaufnahmekopf ist dazu vorgesehen, eine Verbindung zwischen dem Nietdorn und dem Werkzeug herzustellen. Der Werkzeugaufnahmekopf kann eine drehfeste oder zugfeste Bindung herstellen, je nach Ausführung des Nietdorns.

Die vorbeschriebenen Komponenten sind bei üblichen Blindnieten gängig. Ein wesentliches Element des erfindungsgemäßen Blindniets ist jedoch der mindestens eine Dichtring, der zwischen dem Auflagekragen und dem Werkzeugaufnahmekopf angeordnet ist. Der Dichtring kann vor der Montage des Blindniets aus einem Behälter entnommen und auf den Blindniet aufgesetzt werden. Alternativ dazu ist der Dichtring vor der Montage bereits auf dem Blindniet angeordnet. Hierbei ist anzumerken, dass die Positionsangabe derart zu verstehen ist, dass der Dichtring in einer allgemeinen Form an einer beliebigen oder gewünschten Stelle zwischen dem Werkzeugaufnahmekopf und dem Auflagekragen angeordnet sein könnte, je nach Ausführung des Nietdorns und nach Wunsch des Benutzers. Verschiedene Varianten der Positionierung werden weiter nachfolgend erläutert.

Das Material des Dichtrings ist so ausgebildet, dass der Dichtring sehr zähflüssig oder pastös ist, sodass in einem unbelasteten Zustand des Blindniets die Form eines Rings beibehalten wird und ein Benutzer den Dichtring auch einfach auf den Blindniet aufbringen könnte bzw. der mindestens eine Dichtring in einer gelagerten Form des Blindniets seine Ringform behält. Allerdings ist das Dichtmaterial ausreichend plastisch verformbar, sodass beim Aufpressen des Dichtrings seine Form dauerhaft verändert wird. Es ist besonders sinnvoll, die Viskosität derart zu wählen, dass der mindestens eine Dichtring nach der Kontraktion des Blindniets glattstreichbar bleibt. Er sollte folglich auch nicht zu zähflüssig sein.

Der Dichtring könnte sich bei dem Herstellen der Nietverbindung, insbesondere nach dem Einsetzen des Blindniets in eine Nietbohrung, beispielsweise in einem nicht vollständig ausgehärteten Zustand befinden und nach dem Kontrahieren des Blindniets und dem Herstellen der Dichtung aushärten. Folglich kann auch bei einer automatisierten, werkzeuggeführten Herstellung von Blindnietverbindungen automatisch eine Abdichtung erfolgen. Sowohl der Auftragsort, als auch die Auftragsmenge sind dabei direkt an die Anforderungen der erstellten Nietverbindung angepasst. Das Dichtmaterial ist bevorzugt aushärtbar, um eine homogene, dauerhafte Basis für eine Grundierung oder Lackierung bereitzustellen. Beispielhaft basiert das Dichtmaterial auf Polysulfiden. Ein geeigneter Härter könnte Mangandioxid oder ähnliches umfassen.

In einer vorteilhaften Ausführungsform umfasst der Nietdorn an einem von dem Werkzeugaufnahmekopf abgewandten Ende ein Außengewinde, das mit einem Innengewinde in der Hülse korrespondiert, wobei der Werkzeugaufnahmekopf zum Übertragen einer Rotation des Werkzeugs in den Nietdorn ein erstes Profil aufweist, das mit einem zweiten Profil eines Werkzeugs korrespondiert. Damit wird der Nietkörper durch Rotation des Nietdorns aufgrund der ineinandergreifenden Gewinde kontrahiert. Nach Erreichen eines Grenzdrehmoments, das auf die mechanischen Eigenschaften des Nietkörpers abgestimmt ist und nach vollständiger Kontraktion erreicht wird, bricht der Werkzeugaufnahmekopf ab. Der Werkzeugaufnahmekopf und das Werkzeug können ein elliptisches Antriebssystem umfassen. Weiterhin kann der Nietkörper an seiner von dem Werkzeugaufnahmekopf abgewandten Seite eine Öffnung aufweisen, durch die der Nietdorn bei der Kontraktion des Nietkörpers herausragen kann.

In einer vorteilhaften Ausführungsform weist der Nietdorn einen umlaufenden Kragen auf, der auf dem Auflagekragen des Nietkörpers aufliegt. Der umlaufende Kragen, der in dem vorangehend genannten Abschnitt des Nietdorns angeordnet sein kann oder diesen darstellt, presst sich bei der Kontraktion in eine Öffnung des Auflagekragens. Die Öffnung des Auflagekragens und der umlaufende Kragen des Nietdorns könnten jeweils eine Fase aufweisen, die aufeinander abgestimmt sind. Hierdurch könnte der umlaufende Kragen eine gewisse Kegelstumpfform aufweisen, die in eine ebenso kegelstumpfförmige Öffnung eingepresst wird. Der Nietdorn und der Nietkörper werden dadurch zueinander zentriert.

In einer vorteilhaften Ausführungsform ist der mindestens eine Dichtring zwischen dem umlaufenden Kragen und dem Auflagekragen angeordnet. Ausgehend von dem Nietdorn und der Öffnung des Nietkörpers breitet sich das Dichtmaterial folglich radial nach außen aus und überdeckt bevorzugt den Auflagekragen des Nietkörpers weitgehend vollständig.

In einer vorteilhaften Ausführungsform ist der mindestens eine Dichtring zwischen dem Werkzeugaufnahmekopf und dem umlaufenden Kragen angeordnet. Dann wirkt ein Werkzeugnasenstück bei der Kontraktion des Nietkörpers auf den mindestens einen Dichtring ein, sodass dieser ausgehend von dem umlaufenden Kragen radial nach außen über den Auflagekragen des Nietkörpers gequetscht wird. Bei dieser Variante ist zu beachten, dass das Werkzeugnasenstück frei von Verschmutzungen ist und gegebenenfalls regelmäßig mit einem Trennmittel benetzt wird. Das Trennmittel ist bevorzugt auf das Dichtmaterial abgestimmt und dazu ausgebildet, eine Anhaftung des Dichtmaterials zu vermeiden.

In einer vorteilhaften Ausführungsform weist der Auflagekragen an einer von dem Werkzeugaufnahmekopf abgewandten Seite Vorsprünge auf, die sich bei der Kontraktion des Blindniets mit den Werkstücken zum Verhindern einer Rotation des Nietkörpers verklemmen. Die Vorsprünge werden durch das Werkzeug und/oder den umlaufenden Kragen, der auf den Auflagekragen drückt, auf eine dem Auflagekragen zugewandte Oberfläche der Werkstücke gepresst. Hierdurch wird die Lage des Nietkörpers an den Werkstücken insbesondere drehfest fixiert.

Durch den mindestens einen Dichtring kann das Dichtmaterial automatisch in etwaige Spalte oder Zwischenräume eingebracht werden.

In einer vorteilhaften Ausführungsform weist der Aufnahmekragen Einkerbungen auf einer zu dem Werkzeugaufnahmekopf gerichteten Seite auf, wobei der Dichtring derart dimensioniert ist, dass die Einkerbungen nach der Kontraktion des Blindniets mit dem Dichtmaterial gefüllt sind. Das Dichtmaterial wird radial auch über die Einkerbungen gedrängt, sodass diese nach der Kontraktion des Nietkörpers automatisch mit dem Dichtmaterial benetzt sind. Es kann gewünscht sein, anschließend eine ebene Oberfläche durch Spachteln herzustellen. Dies kann entweder für jede Nietverbindung direkt im Anschluss an die Kontraktion oder für eine gesamte Nietreihe oder ähnliche Anordnung durchgeführt werden. Die Einkerbungen könnten dafür vorgesehen sein, mit einer nicht rotierenden Nasenfläche des Werkzeugs in Eingriff zu geraten, um einer Rotation entgegenzuwirken. Da die Einkerbungen teilweise mit der Nasenfläche in Kontakt stehen, könnte es erforderlich sein, nach Entnahme des Werkzeugs das Dichtmaterial mit einem Spachtel glattzuziehen, um die Einkerbungen dann vollständig zu füllen.

In einer vorteilhaften Ausführungsform ist der Werkzeugaufnahmekopf frei von Cetyl-Alkohol. Cetyl-Alkohol wird oftmals als Schmiermittel für Verbindungsmittel verwendet und üblicherweise auf die gesamten Verbindungsmittel gebracht. Um ein einwandfreies Abdichten der hergestellten Nietverbindung zu erreichen, ist es sinnvoll, an dem Werkzeugaufnahmekopf, dem umlaufenden Kragen und/oder dem Auflagekragen Cetyl-Alkohol zu vermeiden. Der Blindniet kann demnach nur an einem von dem Auflagekragen abgewandten Abschnitt entsprechend benetzt werden oder die Benetzung mit einem solchen Schmiermittel wird im Bereich des Auflagekragens entfernt.

In einer vorteilhaften Ausführungsform weist der Blindniet eine Harzbeschichtung auf. Beispielhaft könnten aluminiumpigmentierte Beschichtungen gemäß EN 4473 eingesetzt werden. Eine Harzbeschichtung ist besonders vorteilhaft für die Adhäsion des Dichtmaterials bzw. einer Grundierung oder Lackschicht.

In einer vorteilhaften Ausführungsform ist der mindestens eine Dichtring wärmehärtbar, UV-härtbar und/oder feuchtigkeitshärtend. Ein Aushärten des Dichtmaterials kann durch entsprechende Anwendung von Wärme oder UV-Licht gesteuert werden. Es ist indes denkbar, durch Luftfeuchtigkeit in der Umgebung ein Aushärten zu initiieren. Nach dem Anbringen des mindestens eine Dichtrings müssen in letzterem Fall folglich keine weiteren Vorkehrungen getroffen werden. Der Blindniet könnte weiterhin in einem gekühlten Zustand gelagert werden, sodass eine Aushärtung des Dichtrings aus einem wärmehärtbaren Dichtmaterial unterbrochen wird, wobei nach Anfertigen der Blindnietverbindung durch die Umgebungstemperatur die Aushärtung erfolgt.

In einer vorteilhaften Ausführungsform ist der mindestens eine Dichtring direkt nach der Kontraktion des Blindniets spachtelbar. Das Dichtmaterial darf in dem aufgebrachten Zustand folglich nicht zu zähflüssig sein, sodass es manuell mit einem Spachtel entsprechend verteilt bzw. geglättet werden kann. Es muss jedoch ausreichend pastös bzw. zähflüssig sein, um seine Form nach dem Spachteln auch beizubehalten und nicht abzufließen oder abzutropfen, falls die Verbindung nicht vollständig horizontal angeordnet ist.

In einer vorteilhaften Ausführungsform ist der mindestens eine Dichtring ein Zwei-Komponenten-Gemisch, das vor dem Anbringen des mindestens einen Dichtrings hergestellt oder in Form zweier in Kontakt bringbarer Dichtringe mit voneinander getrennten und bei Kontraktion sich miteinander vermischenden Komponenten realisiert ist. Die beiden Dichtringe bilden folglich das aushärtbare Dichtmaterial erst nach einer entsprechenden Verpressung der beiden Dichtringe miteinander.

Die Erfindung betrifft ferner ein System zum Herstellen von abgedichteten Blindnietverbindungen, aufweisend mindestens einen Blindniet gemäß der vorhergehenden Beschreibung und mindestens ein mit dem Werkzeugaufnahmekopf verbindbares Werkzeug. Das Werkzeug ist auf die Ausführung des Blindniets angepasst und könnte sowohl zur Ausübung einer reinen Zugkraft vorgesehen sein, als auch zur Ausübung einer Rotation. Das Werkzeug könnte elektrisch oder pneumatisch ausgeführt sein.

In einer vorteilhaften Ausführungsform weist das Werkzeug ein Werkzeugnasenstück auf, das eine mit dem mindestens einen Dichtring in Berührung bringbare Nasenfläche aufweist, wobei die Nasenfläche mit einem Trennmittel benetzt ist. Das Werkzeugnasenstück kann eine Nietdornaufnahme aufweisen, das von einer beispielhaft ringförmigen Fläche umgeben ist. Diese kann bei der Kontraktion des Blindniets auf den Nietkörper drücken. Befindet sich der mindestens eine Dichtring zwischen dem Auflagekragen und dem Werkzeugaufnahmekopf, kann die Nasenfläche auf den mindestens einen Dichtring drücken und folglich das Dichtmaterial wie vorangehend beschrieben axial und radial verpressen. Durch das Trennmittel kann ein Anhaften vermieden werden. Es ist bevorzugt, die Sauberkeit des Werkzeugnasenstücks regelmäßig zu prüfen und es beispielsweise regelmäßig mit einem fusselfreien Tuch abzuwischen und gegebenenfalls mit einem Trennmittel zu benetzen.

Weiterhin betrifft die Erfindung ein Verfahren zum Herstellen von abgedichteten Blindnietverbindungen von Werkstücken, aufweisend die Schritte des Anfertigens einer Nietbohrung in den Werkstücken, des Einsteckens eines erfindungsgemäßen Blindniets in die Nietbohrung und des Kontrahierens des Nietkörpers durch ein Werkzeug unter Verpressung des mindestens einen Dichtrings. Anschließend könnte ein Verspachteln des Dichtmaterials erfolgen, falls gewünscht.

In einer vorteilhaften Ausführungsform ist der mindestens eine Dichtring ein Zwei-Komponenten-Gemisch, das vor dem Einsetzen des Blindniets zu einer ringförmigen Raupe geformt und auf den Blindniet aufgesetzt wird.

In einer vorteilhaften Ausführungsform wird der mindestens eine Dichtring direkt vor dem Einsetzen des Blindniets aus einer luftdichten und/oder gekühlten Verpackung entnommen und auf den Blindniet aufgesetzt oder der Blindniet mit aufgesetztem Dichtring wird direkt vor dem Einsetzen aus einer luftdichten und/oder gekühlten Verpackung entnommen.

Weiterhin kann das Verfahren das Spachteln des Dichtmaterials nach dem Verpressen des mindestens einen Dichtrings umfassen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Blindniets gemäß einem Ausführungsbeispiel in einem unkontrahierten, neutralen Zustand und einem kontrahierten Zustand.
- Fig. 2: eine schematische Darstellung eines Blindniets gemäß einem weiteren Ausführungsbeispiel.
- Fig. 3: eine schematische Darstellung eines Auflagekragens.
- Fig. 4: eine schematische Darstellung eines Systems zum Herstellen von Blindnietverbindungen.
- Fig. 5: eine schematische Darstellung eines Verfahrens zum Herstellen von Blindnietverbindungen.

### Detaillierte Beschreibung von Ausführungsbeispielen

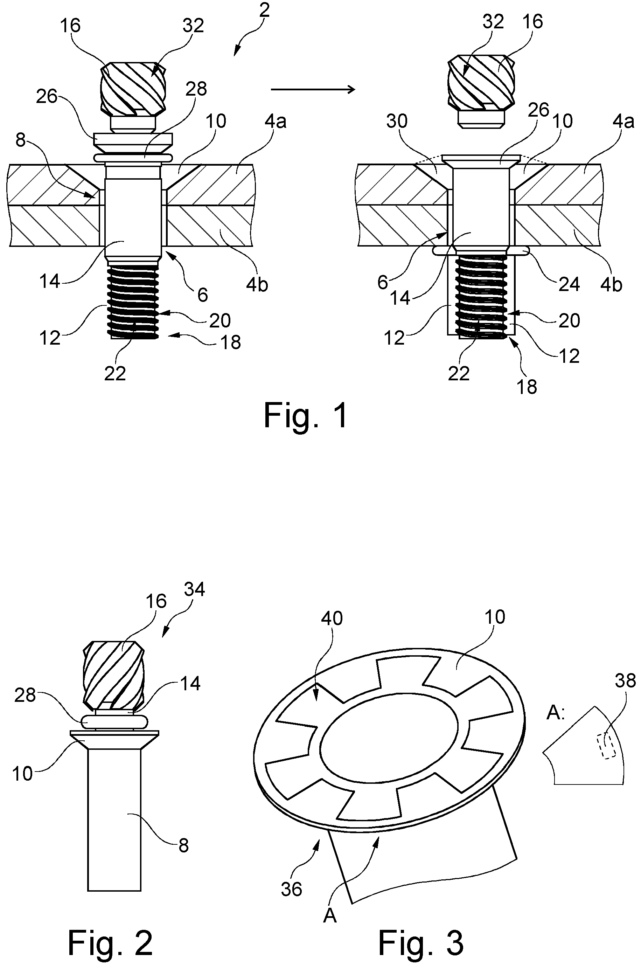

Fig. 1 zeigt einen Blindniet 2 zum Verbinden von Werkstücken 4a und 4b. Diese könnten beispielsweise aus einem metallischen Blech oder einem Kunststoffmaterial, gegebenenfalls mit Faserverstärkung, bestehen und für ein Flugzeugbauteil oder ähnliches Verwendung finden. Die beiden Werkstücke 4a und 4b liegen bündig aufeinander und weisen eine Nietbohrung 6 auf, die sich vollständig durch beide Werkstücke 4a und 4b erstreckt. Der Blindniet 2 ist in die Nietbohrung 6 eingesteckt und befindet sich auf der linken Seite der Zeichnungsebene in einem neutralen (Liefer-)Zustand.

Der Blindniet 2 umfasst einen hohlen, verformbaren Nietkörper 8 mit einem Auflagekragen 10 und einer sich hieran anschließenden Hülse 12. In der Hülse 12 befindet sich ein Nietdorn 14, der einen außerhalb der Hülse 12 positionierten Werkzeugaufnahmekopf 16 umfasst. Die Hülse 12 weist an einem vom Werkzeugaufnahmekopf 16 abgewandten Ende 18 ein Innengewinde 20 auf, während der Nietdorn 14 an dieser Stelle ein hierzu komplementäres Außengewinde 22 umfasst. Durch Rotation des Nietdorns 14 wird, bei gleichbleibender Lage des Nietdorns 14, das Ende 18 der Hülse 12 an dem Außengewinde 22 in Richtung der Nietbohrung 6 gedrängt. Die Hülse 12 verformt sich dann entsprechend. Dies ist in der Zeichnungsebene auf der rechten Seite gezeigt. Durch die Verformung entstehen radiale Auswölbungen 24 der Hülse 12, die die Werkstücke 4a und 4b zusammen mit dem Auflagekragen 10 zusammenquetschen.

Beispielhaft weist der Nietdorn 14 einen umlaufenden Kragen 26 auf, der während der Kontraktion der Hülse 12 in Richtung des Auflagekragens 10 gepresst wird. Zwischen dem umlaufenden Kragen 26 und dem Auflagekragen 10 befindet sich ein Dichtring 28, der aus einem aushärtbaren Dichtmaterial besteht. Das Dichtmaterial befindet sich nach Positionierung an dem Blindniet 2 in einem Zustand, der eine ringförmige Anordnung um den Nietdorn 14 ermöglicht, dennoch ausreichend pastös bzw. plastisch verformbar ist, sodass das Material während der Kontraktion des Nietkörpers 8 radial verpresst werden kann. Bei der Kontraktion des Nietkörpers 8 und dem Aufdrücken des umlaufenden Kragen 26 auf den Auflagekragen 10 wird folglich durch Verpressen des Dichtrings 28 eine Dichtmaterialschicht 30 hergestellt, die sich bei entsprechender Dimensionierung des Dichtrings 28 vollständig über den Auflagekragen 10 erstreckt. Etwaige Spalte oder Zwischenräume zwischen dem äußeren Werkstück 4a und dem Auflagekragen 10 bzw. zwischen dem Auflagekragen 10 und dem umlaufenden Kragen 26 werden dadurch vollständig abgedeckt. Es könnte sinnvoll sein, anschließend das Dichtmaterial zu spachteln bzw. mit einem Spachtel glatt zu ziehen.

Auf der rechten Seite der Fig. 1 ist der Werkzeugaufnahmekopf 16 in einem abgebrochenen Zustand dargestellt, der durch vollständige Kontraktion des Nietkörpers 8 durch Überschreiten eines vorbestimmten Grenzdrehmoments erreicht wird. Die Nietverbindung ist dann vollständig. Beispielhaft weist der Werkzeugaufnahmekopf 16 ein erstes Profil 32 auf, das mit einem zweiten Profil eines Werkzeugs (hier nicht gezeigt) zur Verbindung von Werkzeug und Werkzeugaufnahmekopf 16 komplementär ausgebildet ist.

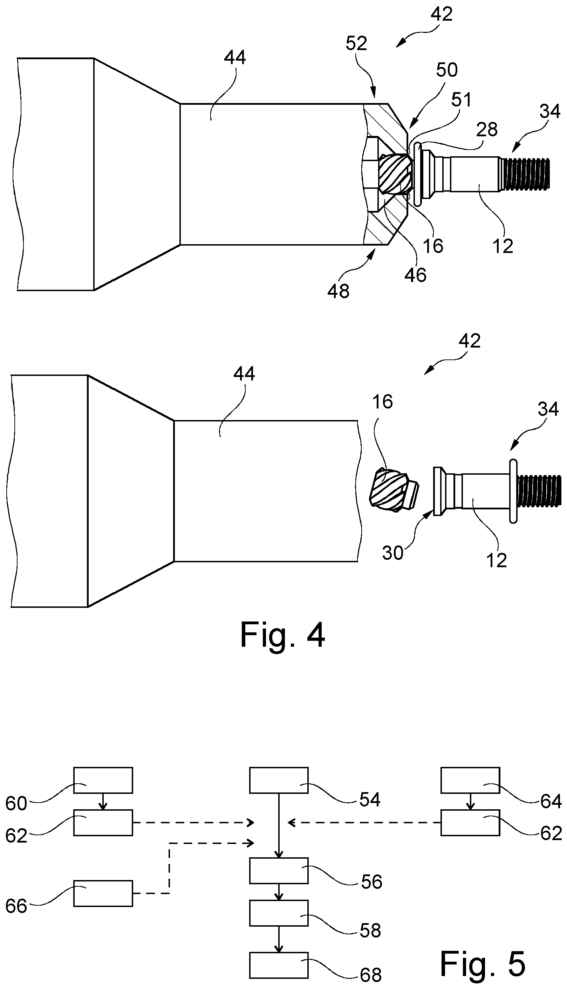

Fig. 2 zeigt eine alternative Gestaltung eines Blindniets 34, bei dem der Nietkörper 8 auf dieselbe Weise ausgestaltet ist, der Nietdorn 14 jedoch keinen umlaufenden Kragen 26 umfasst. Der Dichtring 28 ist direkt zwischen dem Werkzeugaufnahmekopf 16 und dem Auflagekragen 10 angeordnet. Beim Kontrahieren des Nietkörpers 8 wird ein Werkzeugnasenstück (siehe Fig. 4) über den Dichtring 28 auf den Auflagekragen 10 aufgepresst, sodass hierdurch ein Verpressen des Dichtmaterials erfolgt.

In Fig. 3 wird der Auflagekragen 10 in einer schrägen Draufsicht gezeigt. Auf einer von den Werkzeugaufnahmekopf 16 abgewandten Unterseite 36 weist der Auflagekragen 10 beispielhaft mehrere, über dem Auflagekragen 10 verteilte Vorsprünge 38 auf. Die Vorsprünge 38 pressen sich in das äußere Werkstück 4a ein, sodass hierdurch einer Rotation des Nietkörpers 8 entgegengewirkt wird.

Es ist denkbar, auch auf der zu dem Werkzeugaufnahmekopf 16 gewandten Seite Einkerbungen 40 vorzusehen, die mit dem Werkzeugnasenstück (siehe Fig. 4) formschlüssig in Eingriff bringbar sind, um einer Rotation des Nietkörpers 8 entgegenzuwirken. Durch Verpressen des Dichtmaterials werden die Einkerbungen 40 mit dem Dichtmaterial gefüllt. Ein anschließendes Verspachteln kann das Dichtmaterial vollständig in den Einkerbungen 40 verteilen.

Fig. 4 zeigt ein System 42 zum Herstellen von abgedichteten Blindnietverbindungen. Hier ist ein Blindniet 34 wie in Fig. 2 dargestellt, das mit einem Werkzeug 44 gekoppelt ist. Der Werkzeugaufnahmekopf 16 steckt dabei in einem zweiten Profil 46 und kann hierdurch von dem Werkzeug 44 rotiert werden. Das Werkzeug 44 weist ein Werkzeugnasenstück 48 auf, welches eine mit dem Dichtring 28 in Berührung bringbare Nasenfläche 50 aufweist, die beispielhaft ringförmig um eine Aufnahmeöffnung 52 des Werkzeugs 44 angeordnet ist. Diese kann beim Kontrahieren des Nietkörpers 12 auf den Dichtring 28 einwirken, sodass dieser wie in der unteren Darstellung von Fig. 4 dargestellt die Dichtmaterialschicht 30 bildet. Lediglich beispielhaft kann die Nasenfläche 50 Eingriffselemente 51 aufweisen, die in die Einkerbungen 40 des Nietkörpers 8 eingreifen, falls solche vorgesehen und gewünscht sind.

Schließlich zeigt Fig. 5 ein Verfahren zum Herstellen von abgedichteten Blindnietverbindungen von Werkstücken und weist die Schritte des Anfertigens 54 der Nietbohrung 6 in den Werkstücken 4a und 4b, des Einsteckens 56 des Blindniets 2 bzw. 34 in die Nietbohrung 6, und des Kontrahierens 58 des Nietkörpers 8 durch das Werkzeug 44 unter Verpressung des mindestens einen Dichtrings 28. Dabei kann der mindestens eine Dichtring 28 ein Zwei-Komponenten-Gemisch sein, das vor dem Einsetzen 56 des Blindniets 2 bzw. 34 zu einer ringförmigen Raupe geformt 60 und auf den Blindniet 2 bzw. 34 aufgesetzt werden 62. Der mindestens eine Dichtring 28 könnte indes direkt vor dem Einsetzen 56 des Blindniets 2 bzw. 34 aus einer luftdichten und/oder gekühlten Verpackung entnommen 64 und auf den Blindniet 2 bzw. 34 aufgesetzt 62 werden oder der Blindniet 2 bzw. 34 könnte mit aufgesetztem Dichtring 28 direkt vor dem Einsetzen 56 aus einer luftdichten und/oder gekühlten Verpackung entnommen werden 66.

Nach der Fertigstellung der Blindnietverbindung kann das Dichtmaterial gespachtelt werden 68.

### Bezugszeichenliste

- 2: Blindniet
- 4a, 4b: Werkstück
- 6: Nietbohrung
- 8: Nietkörper
- 10: Auflagekragen
- 12: Hülse
- 14: Nietdorn
- 16: Werkzeugaufnahmekopf
- 18: Ende
- 20: Innengewinde
- 22: Außengewinde
- 24: radiale Auswölbung
- 26: umlaufender Kragen
- 28: Dichtring
- 30: Dichtmaterialschicht
- 32: erstes Profil
- 34: Blindniet
- 36: Unterseite
- 38: Vorsprung
- 40: Einkerbung
- 42: System
- 44: Werkzeug
- 46: zweites Profil
- 48: Werkzeugnasenstück
- 50: Nasenfläche
- 52: Aufnahmeöffnung
- 54: Anfertigen Nietbohrung
- 56: Einstecken des Blindniets
- 58: Kontrahieren des Nietkörpers
- 60: Formen zu ringförmiger Raupe
- 62: Aufsetzen auf Blindniet
- 64: Entnehmen Dichtring aus luftdichter und/oder gekühlter Verpackung
- 66: Entnehmen Blindniet aus luftdichter und/oder gekühlter Verpackung
- 68: Spachteln

## Patentansprüche

1. Blindniet (2, 34) zum Verbinden von Werkstücken (4a, 4b), aufweisend
einen hohlen, verformbaren Nietkörper (8) mit einem Auflagekragen (10) und einer sich hieran anschließenden Hülse (12),
einen in der Hülse (12) angeordneten und sich durch den Auflagekragen (10) erstreckenden Nietdorn (14) mit einem Werkzeugaufnahmekopf (16), und
mindestens einen Dichtring (28),
wobei der mindestens eine Dichtring (28) zwischen dem Auflagekragen (10) und dem Werkzeugaufnahmekopf (16) angeordnet ist,
wobei der mindestens eine Dichtring (28) aus einem aushärtbaren und nicht vollständig ausgehärteten Dichtmaterial besteht,
wobei der mindestens eine Dichtring (28) so angeordnet ist, dass er bei einer Kontraktion des Blindniets (2, 34) von einem mit dem Werkzeugaufnahmekopf (16) verbindbaren Werkzeug (44) oder von einem Abschnitt des Nietdorns (16) axial zu dem Auflagekragen (10) gepresst wird, und
wobei der mindestens eine Dichtring (28) dazu ausgebildet ist, beim Pressen des Dichtrings (28) radial und axial in Spalten und Zwischenräume auf dem Auflagekragen (10) und zwischen dem Auflagekragen (10) und den Werkstücken (4a, 4b) zu fließen und dort anzuhaften.

2. Blindniet (2, 34) nach Anspruch 1,
wobei der Nietdorn (14) an einem von dem Werkzeugaufnahmekopf (16) abgewandten Ende (18) ein Außengewinde (22) umfasst, das mit einem Innengewinde (20) in der Hülse (12) korrespondiert, und
wobei der Werkzeugaufnahmekopf (16) zum Übertragen einer Rotation des Werkzeugs (44) in den Nietdorn (14) ein erstes Profil (32) aufweist, das mit einem zweiten Profil (46) eines Werkzeugs (44) korrespondiert.

3. Blindniet (2, 34) nach Anspruch 1,
wobei der Nietdorn (14) einen umlaufenden Kragen (26) aufweist, der auf dem Auflagekragen (10) des Nietkörpers (8) aufliegt.

4. Blindniet (2, 34) nach Anspruch 3,
wobei der mindestens eine Dichtring (28) zwischen dem umlaufenden Kragen (26) und dem Auflagekragen (10) angeordnet ist.

5. Blindniet (2, 34) nach Anspruch 3,
wobei der mindestens eine Dichtring (28) zwischen dem Werkzeugaufnahmekopf (16) und dem umlaufenden Kragen (26) angeordnet ist.

6. Blindniet (2, 34) nach einem der vorhergehenden Ansprüche,
wobei der Auflagekragen (10) an einer von dem Werkzeugaufnahmekopf (16) abgewandten Seite (36) Vorsprünge (38) aufweist, die sich bei der Kontraktion des Blindniets (2, 34) mit den Werkstücken (4a, 4b) zum Verhindern einer Rotation des Nietkörpers (8) verklemmen.

7. Blindniet (2, 34) nach einem der vorhergehenden Ansprüche,
wobei der Auflagekragen (10) Einkerbungen (40) auf einer zu dem Werkzeugaufnahmekopf (16) gerichteten Seite des Auflagekragens (10) aufweist, und
wobei der Dichtring (28) derart dimensioniert ist, dass die Einkerbungen (40) nach der Kontraktion des Blindniets (2, 34) mit dem Dichtmaterial gefüllt sind.

8. Blindniet (2, 34) nach einem der vorhergehenden Ansprüche,
wobei der Werkzeugaufnahmekopf (16) frei von Cetyl-Alkohol ist.

9. Blindniet (2, 34) nach einem der vorhergehenden Ansprüche,
wobei der Blindniet (2, 34) eine Harzbeschichtung aufweist.

10. Blindniet (2, 34) nach einem der vorhergehenden Ansprüche,
wobei der mindestens eine Dichtring (28) wärmehärtbar, UV-härtbar und/oder feuchtigkeitshärtend ist.

11. Blindniet (2, 34) nach einem der vorhergehenden Ansprüche,
wobei der Dichtring (28) direkt nach der Kontraktion des Blindniets (2, 34) spachtelbar ist.

12. Blindniet (2, 34) nach einem der vorhergehenden Ansprüche,
wobei der mindestens eine Dichtring (28) ein Zwei-Komponenten-Gemisch ist, das vor dem Anbringen des mindestens einen Dichtrings (28) hergestellt oder in Form zweier in Kontakt bringbarer Dichtringe (28) mit voneinander getrennten und bei Kontraktion sich miteinander vermischenden Komponenten realisiert ist.

13. System (42) zum Herstellen von abgedichteten Blindnietverbindungen, aufweisend mindestens einen Blindniet (2, 34) nach einem der vorhergehenden Ansprüche und mindestens ein mit dem Werkzeugaufnahmekopf (16) verbindbares Werkzeug (44).

14. System (42) nach Anspruch 13,
wobei das Werkzeug (44) ein Werkzeugnasenstück (48) aufweist, das eine mit dem mindestens einen Dichtring (28) in Berührung bringbare Nasenfläche (50) aufweist, und
wobei die Nasenfläche (50) mit einem Trennmittel benetzt ist.

15. Verfahren zum Herstellen von abgedichteten Blindnietverbindungen von Werkstücken (4a, 4b), aufweisend die Schritte:
- Anfertigen (54) einer Nietbohrung (6) in den Werkstücken (4a, 4b),
- Einstecken (56) eines Blindniets (2, 34) nach einem der vorhergehenden Ansprüche in die Nietbohrung (6), und
- Kontrahieren (58) des Nietkörpers (8) durch ein Werkzeug (44) unter Verpressung des mindestens einen Dichtrings (28).

16. Verfahren nach Anspruch 15,
wobei der mindestens eine Dichtring (28) ein Zwei-Komponenten-Gemisch ist, das vor dem Einsetzen des Blindniets (2, 34) zu einer ringförmigen Raupe geformt (60) und auf den Blindniet aufgesetzt (62) wird.

17. Verfahren nach Anspruch 15 oder 16,
wobei der mindestens eine Dichtring (28) direkt vor dem Einsetzen (56) des Blindniets (2, 34) aus einer luftdichten und/oder gekühlten Verpackung entnommen (64) und auf den Blindniet (2, 34) aufgesetzt (62) wird oder wobei der Blindniet (2, 34) mit aufgesetztem Dichtring (28) direkt vor dem Einsetzen (56) aus einer luftdichten und/oder gekühlten Verpackung entnommen (66) wird.

## Claims

1. Blind rivet (2, 34) for connecting workpieces (4a, 4b), comprising a hollow, deformable rivet body (8) with a support collar (10) and an adjoining sleeve (12),
a rivet mandrel (14) arranged in the sleeve (12) and extending through the support collar (10) with a tool receiving head (16), and
at least one sealing ring (28),
wherein the at least one sealing ring (28) is arranged between the support collar (10) and the tool receiving head (16),
wherein the at least one sealing ring (28) consists of a hardenable and not completely hardened sealing material,
wherein the at least one sealing ring (28) is arranged so that when the blind rivet (2, 34) contracts, it is pressed axially towards the support collar (10) by a tool (44) that can be connected to the tool receiving head (16) or by a section of the rivet mandrel (14), and
wherein the at least one sealing ring (28) is designed to flow radially and axially into gaps and spaces on the support collar (10) and between the support collar (10) and the workpieces (4a, 4b) when the sealing ring (28) is pressed and to adhere there.

2. Blind rivet (2, 34) according to claim 1,
wherein the rivet mandrel (14) comprises an external thread (22) at an end (18) facing away from the tool receiving head (16), which corresponds to an internal thread (20) in the sleeve (12), and
wherein the tool receiving head (16) has a first profile (32) for transmitting a rotation of the tool (44) into the rivet mandrel (14), which corresponds to a second profile (46) of a tool (44).

3. Blind rivet (2, 34) according to claim 1,
wherein the rivet mandrel (14) has a circumferential collar (26) which rests on the support collar (10) of the rivet body (8).

4. Blind rivet (2, 34) according to claim 3,
wherein the at least one sealing ring (28) is arranged between the circumferential collar (26) and the support collar (10).

5. Blind rivet (2, 34) according to claim 3,
wherein the at least one sealing ring (28) is arranged between the tool receiving head (16) and the circumferential collar (26).

6. Blind rivet (2, 34) according to one of the preceding claims,
wherein the support collar (10) has projections (38) on a side (36) facing away from the tool receiving head (16), which jam with the workpieces (4a, 4b) when the blind rivet (2, 34) contracts to prevent rotation of the rivet body (8).

7. Blind rivet (2, 34) according to one of the preceding claims,
wherein the support collar (10) has notches (40) on a side of the support collar (10) directed towards the tool receiving head (16), and
wherein the sealing ring (28) is dimensioned such that the notches (40) are filled with the sealing material after the blind rivet (2, 34) has contracted.

8. Blind rivet (2, 34) according to one of the preceding claims,
wherein the tool receiving head (16) is free of cetyl alcohol.

9. Blind rivet (2, 34) according to one of the preceding claims,
wherein the blind rivet (2, 34) has a resin coating.

10. Blind rivet (2, 34) according to one of the preceding claims,
wherein the at least one sealing ring (28) is heat-curable, UV-curable and/or moisture-curable.

11. Blind rivet (2, 34) according to one of the preceding claims,
wherein the sealing ring (28) can be filled directly after the blind rivet (2, 34) has contracted.

12. Blind rivet (2, 34) according to one of the preceding claims,
wherein the at least one sealing ring (28) is a two-component mixture that is produced before the at least one sealing ring (28) is attached or is realized in the form of two sealing rings (28) that can be brought into contact with components that are separate from one another and mix with one another when contracted.

13. System (42) for producing sealed blind rivet connections, comprising at least one blind rivet (2, 34) according to one of the preceding claims and at least one tool (44) which can be connected to the tool receiving head (16).

14. System (42) according to claim 13,
wherein the tool (44) has a tool nose piece (48) which has a nose surface (50) which can be brought into contact with the at least one sealing ring (28), and
wherein the nose surface (50) is wetted with a release agent.

15. Method for producing sealed blind rivet connections of workpieces (4a, 4b), comprising the steps:
- Making (54) a rivet hole (6) in the workpieces (4a, 4b),
- Insertion (56) of a blind rivet (2, 34) according to one of the preceding claims into the rivet hole (6), and
- Contraction (58) of the rivet body (8) by a tool (44) while pressing the at least one sealing ring (28).

16. Method according to claim 15,
wherein the at least one sealing ring (28) is a two-component mixture which is formed into an annular bead (60) and placed onto the blind rivet (62) before the blind rivet (2, 34) is inserted.

17. Method according to claim 15 or 16,
wherein the at least one sealing ring (28) is removed (64) from an airtight and/or cooled packaging directly before the insertion (56) of the blind rivet (2, 34) and placed (62) on the blind rivet (2, 34), or wherein the blind rivet (2, 34) with the attached sealing ring (28) is removed (66) from an airtight and/or cooled packaging directly before insertion (56).

## Revendications

1. Rivet aveugle (2, 34) pour relier des pièces (4a, 4b), ayant :
un corps de rivet creux et déformable (8) avec un collier de support (10) et un manchon attenant (12),
un mandrin de rivet (14) disposé dans le manchon (12) et s'étendant à travers le collier de support (10) avec une tête de réception d'outil (16), et
au moins une bague d'étanchéité (28),
dans lequel au moins une bague d'étanchéité (28) est disposée entre le collier de support (10) et la tête de réception d'outil (16),
dans lequel au moins une bague d'étanchéité (28) est constituée d'un matériau d'étanchéité durcissable et non complètement durci,
dans lequel la au moins une bague d'étanchéité (28) est agencée de telle sorte que lorsque le rivet aveugle (2, 34) se contracte, il est pressé axialement vers le collier de support (10) par un outil (44) pouvant être relié à la tête de réception d'outil (16) ou
par une section du mandrin de rivet (14), et
la au moins une bague d'étanchéité (28) est conçue pour s'écouler radialement et axialement dans des interstices et des espaces sur le collier de support (10) et entre le collier de support (10) et les pièces (4a, 4b) lorsque la bague d'étanchéité (28) est pressée et pour y adhérer.

2. Rivet aveugle (2, 34) selon la revendication 1,
dans lequel le mandrin de rivet (14) comprend un filetage externe (22) au niveau d'une extrémité (18) opposée à la tête de réception d'outil (16), qui correspond à un filetage interne (20) dans le manchon (12), et
la tête de réception d'outil (16) présentant un premier profil (32) pour transmettre une rotation de l'outil (44) dans le mandrin de rivet (14), qui correspond à un deuxième profil (46) d'un outil (44).

3. Rivet aveugle (2, 34) selon la revendication 1,
dans lequel le mandrin de rivet (14) présente un collier circonférentiel (26) qui repose sur le collier de support (10) du corps de rivet (8).

4. Rivet aveugle (2, 34) selon la revendication 3,
dans lequel au moins une bague d'étanchéité (28) est disposée entre le collier circonférentiel (26) et le collier de support (10).

5. Rivet aveugle (2, 34) selon la revendication 3,
dans lequel au moins une bague d'étanchéité (28) est disposée entre la tête de réception d'outil (16) et le collier circonférentiel (26).

6. Rivet aveugle (2, 34) selon l'une des revendications précédentes,
le collier de support (10) comportant des saillies (38) sur un côté (36) opposé à la tête de réception d'outil (16), qui se coincent avec les pièces (4a, 4b) lorsque le rivet aveugle (2, 34) se contracte pour empêcher la rotation du corps du rivet (8).

7. Rivet aveugle (2, 34) selon l'une des revendications précédentes,
dans lequel le collier de support (10) présente des encoches (40) sur un côté du collier de support (10) dirigé vers la tête de réception d'outil (16), et
dans lequel la bague d'étanchéité (28) est dimensionnée de telle sorte que les encoches (40) soient remplies du matériau d'étanchéité après la contraction du rivet aveugle (2, 34).

8. Rivet aveugle (2, 34) selon l'une des revendications précédentes,
dans lequel la tête de réception d'outil (16) est exempte d'alcool cétylique.

9. Rivet aveugle (2, 34) selon l'une des revendications précédentes,
le rivet aveugle (2, 34) ayant un revêtement en résine.

10. Rivet aveugle (2, 34) selon l'une des revendications précédentes,
dans lequel au moins une bague d'étanchéité (28) est durcissable à la chaleur, durcissable aux UV et/ou durcissable à l'humidité.

11. Rivet aveugle (2, 34) selon l'une des revendications précédentes,
la bague d'étanchéité (28) pouvant être remplie directement après la contraction du rivet aveugle (2, 34).

12. Rivet aveugle (2, 34) selon l'une des revendications précédentes,
le ou les bagues d'étanchéité (28) étant un mélange à deux composants qui est produit avant la fixation du ou des bagues d'étanchéité (28) ou qui est réalisé sous la forme de deux bagues d'étanchéité (28) qui peuvent être mis en contact avec des composants séparés l'un de l'autre et se mélangent l'un avec l'autre lors de la contraction.

13. Système (42) pour réaliser des liaisons par rivets aveugles étanches, comprenant au moins un rivet aveugle (2, 34) selon l'une des revendications précédentes et au moins un outil (44) pouvant être relié à la tête de réception d'outils (16).

14. Système (42) selon la revendication 13,
dans lequel l'outil (44) comporte un nez d'outil (48) qui présente une surface de nez (50) qui peut être mise en contact avec au moins une bague d'étanchéité (28), et dans lequel la surface du nez (50) est mouillée avec un agent de démoulage.

15. Procédé de réalisation d'assemblages par rivets aveugles étanches de pièces (4a, 4b), comprenant les étapes:
- Réaliser (54) un trou de rivet (6) dans les pièces (4a, 4b),
- Insertion (56) d'un rivet aveugle (2, 34) selon l'une des revendications précédentes dans le trou du rivet (6), et
- Contraction (58) du corps de rivet (8) par un outil (44) tout en appuyant sur au moins une bague d'étanchéité (28).

16. Procédé selon la revendication 15,
dans lequel au moins une bague d'étanchéité (28) est un mélange à deux composants qui est formé en un cordon annulaire (60) et placé sur le rivet aveugle (62) avant l'insertion du rivet aveugle (2, 34).

17. Procédé selon la revendication 15 ou 16,
la au moins une bague d'étanchéité (28) est retirée (64) d'un emballage hermétique et/ou refroidi directement avant l'insertion (56) du rivet aveugle (2, 34) et placé (62) sur le rivet aveugle (2, 34), ou le rivet aveugle (2, 34) avec la bague d'étanchéité (28) fixé est retiré (66) d'un emballage hermétique et/ou refroidi directement avant l'insertion (56).
